# NEUE EUROPÄISCHE PATENTSCHRIFT

(11) **EP 2 094 611 B2**
(45) Veröffentlichungstag und Bekanntmachung des Hinweises auf die Entscheidung über den Einspruch: **16.12.2020**
(45) Hinweis auf die Patenterteilung: 23.06.2010
(21) Anmeldenummer: 07847381.6
(22) Anmeldetag: 27.11.2007
(51) Int. Cl.: C02F 1/68, C02F 1/42

(54) **VERFAHREN UND VORRICHTUNG ZUR ANREICHERUNG VON WASSER MIT MAGNESIUM-IONEN**
PROCESS AND DEVICE FOR ENRICHING WATER WITH MAGNESIUM IONS
PROCÉDÉ ET DISPOSITIF D'ENRICHISSEMENT D'EAU EN IONS DE MAGNÉSIUM

(30) Priorität: 01.12.2006 DE 102006058223
(43) Veröffentlichungstag der Anmeldung: 02.09.2009
(73) Patentinhaber: BWT Aktiengesellschaft, 5330 Mondsee (AT)
(72) Erfinder: JOHANN, Jürgen, 5310 Mondsee (AT); BISSEN, Monique, 5310 Mondsee (AT)
(74) Vertreter: Friderichs, Gunther
(86) Internationale Anmeldenummer: PCT/EP2007/062854
(87) Internationale Veröffentlichungsnummer: WO 2008/065099

(56) Entgegenhaltungen:
- EP-A1- 0 611 595
- EP-A2- 1 110 914
- WO-A-02/27038
- WO-A1-2005/092798
- DE-A1- 2 800 516
- DE-A1- 3 243 147
- DE-A1- 3 812 413
- DE-A1- 3 812 413
- DE-A1- 10 020 437
- GB-A- 2 020 266
- US-A- 5 814 224
- Zagorodni Andrei: "Ion Exchange Materials: Properties and Applications", 1 January 2007 (2007-01-01), Elsevier Science ISBN: 978-0-08-044552-6 pages 37-45, DOI: 10.1016/B978-0-08-044552-6.X5000-X,
- Höll W.H. et al: "Conversion of cation exchange resins to the magnesium form using Mg(OH)2 and CO2" In: Streat M.: "Ion exchange for industry", 1 January 1988 (1988-01-01), Ellis Horwood Ltd., Chichester ISBN: 0745803539 pages 139-147,
- Helfferich F.: "Ionenaustauscher", 1 January 1959 (1959-01-01), Verlag Chemie GmbH, Weinheim Bd. 1 pages 173-174,
- Dorfner Konrad: "Ion Exchangers", 1 January 1990 (1990-01-01), Walter de Gruyter, Berlin, New York pages 99-108,
- DIN 54403: Prüfung von Ionenaustauschern - Bestimmung der totalen Kapazität von Ionenaustauschern, April 2009
- Spiro M.; Deogratius J.: "What causes scum on tea?", Nature, vol. Bd. 364, 13 August 1993 (1993-08-13), page 581,
- DIN 54403: Prüfung von Ionenaustauschern - Bestimmung der totalen Kapazität von Ionenaustauschern, Dezember 2001

## Beschreibung

Die Erfindung betrifft ein Verfahren und eine Vorrichtung zur Anreicherung von Wasser, insbesondere von Trinkwasser, mit Magnesium-Ionen.

Um von Wasser durchströmte Installationen, wie Rohrleitungen, Warmwassererzeuger und Armaturen, vor Inkrustierungen und Korrosionen zu schützen, ist es gebräuchlich, das Wasser aufzubereiten. Da Inkrustierungen vor allem durch Ablagerungen von Salzen der Härtebildner Calcium und Magnesium hervorgerufen werden, werden zum Schutz der Installationen zumeist Enthärtungsanlagen eingesetzt, welche Calcium- und Magnesium-Ionen aus dem Wasser entfernen. Die Enthärtungsanlagen funktionieren gewöhnlich nach dem Prinzip des Ionenaustauschs, wobei Calcium- und Magnesium-Ionen entweder vollständig oder teilweise durch Natrium- oder aber durch Kalium-Ionen aus einem Ionenaustauscher ersetzt werden. Zum Schutz der Installationen vor Korrosionen können dem Wasser Korrosionsschutzmittel in Form von Poly- und/oder Orthophosphaten, Silikaten, Carbonaten und/oder Hydroxiden zugegeben werden, zumeist mit Hilfe von Dosiersystemen.

Neben der Wasseraufbereitung in Rohrleitungen oder anderen wasserführenden Installationen werden auch Verfahren eingesetzt, bei denen das Wasser direkt an der Zapfstelle aufbereitet wird. Diese Art der Wasseraufbereitung direkt an der Zapfstelle oder aber auch in separaten Behältern bezeichnet man als Aufbereitung am Point of Use (POU). Dabei werden entweder direkt vor oder am Zapfhahn angeordnete Systeme verwendet, oder offene Systeme, bei denen das Wasser in separaten Behältern, zumeist Kannen, aufbereitet wird.

Während an der Zapfstelle Geräte zur Wasseraufbereitung direkt am Auslaufhahn oder unmittelbar davor eingebaut werden, werden zur Aufbereitung von Wasser in separaten Behältern zumeist Systeme verwendet, bei welchen das aufzubereitende Wasser von oben in einen Einsatz oder Aufsatz eines Behälters gefüllt wird, aus dem es anschließend durch einen Feinfilter zur Entfernung von Partikeln, durch Aktivkohle zur Entfernung von Chlor, Geschmacks- und Geruchsstoffen sowie durch einen Ionenaustauscher zur Entfernung von Härtebildnern, wie Calcium- und Magnesium-Ionen, Schwermetallen und Hydrogencarbonat, in einen unteren Teil des Behälters fließt. Diese Behälter sind als sogenannte Pitcher oder Jugs am Markt bekannt und werden zum Beispiel von den Firmen Anna und Brita angeboten.

Die in diesen Behältern verwendeten Ionenaustauscher enthalten zumeist schwach saure Kationenaustauscherharze, in denen die Härtebildner und die Schwermetalle des Trinkwassers zum größten Teil gegen Wasserstoff-Ionen aus dem Ionenaustauscher ausgetauscht werden. Dieser Austausch hat zur Folge, dass das aufbereitete Trinkwasser einen pH-Wert im Bereich von etwa 4.5 bis 5 besitzt, während normales, d.h. nicht-aufbereitetes Trinkoder Leitungswasser überwiegend einen pH-Wert von mehr als 7 aufweist.

Diese Absenkung des pH-Werts hat Folgen, wenn das im Behälter aufbereitete Wasser, wie in vielen Fällen üblich, nicht nur zum Trinken oder zum Kochen verwendet wird, sondern auch zur Zubereitung von Heißwassergetränken, insbesondere zur Zubereitung von Tee. Da für die Farbe des Tees einzig und allein der pH-Wert des Wassers und nicht die Inhaltsstoffe des Tees verantwortlich sind, ist ein Tee umso heller und somit umso klarer, je niedriger der pH-Wert ist. Die Ursache dafür liegt darin, dass Teeblätter Catechine, Chlorophyll und Flavonoide enthalten, welche natürliche pH-Indikatoren darstellen. Liegt der pH-Wert unter einem Wert von 4, so wird der Tee-Aufguss farblos. Wenn das Wasser einen pH-Wert von mehr als 7 aufweist, wird der Tee dunkler und es kommt gleichzeitig zur Oxidation von Polyphenolen, welche im Teeblatt enthalten sind. Diese wiederum vernetzen zu wasserunlöslichen Polymeren, welche dann an der 5 Oberfläche einen dünnen Film bilden.

Um eine Absenkung des pH-Werts zu vermindern, werden daher die schwach sauren Kationenaustauscherharze im Ionenaustauscher in einer gepufferten Form eingesetzt, in der sie zu einem gewissen Anteil mit Natrium- oder auch mit Kalium-Ionen konditioniert bzw. beladen sind, während der Rest in der Wasserstoff-Ionen-Form verbleibt. Somit wird beim Austausch nicht die gesamte Kationen-Fracht des Rohwassers durch Wasserstoff-Ionen ersetzt, sondern zum Teil durch Natrium- bzw. Kalium-Ionen. Der pH-Wert des aufbereiteten Wassers kann durch diese Art der Pufferung auf einen Wert von mehr als 6 eingestellt werden.

Generell kann jedoch festgestellt werden, dass in Folge dieser Wasseraufbereitung dem Trinkwasser physiologisch wichtige Magnesium-Ionen mehr oder weniger stark entzogen werden, wodurch sich die Qualität des Trinkwassers verschlechtert. Auf der anderen Seite wird die Erhöhung des Natriumanteils im Trinkwasser als nachteilig erachtet, insbesondere wenn das aufbereitete Trinkwasser zur Zubereitung von Säuglingsnahrung verwendet wird.

Aus dem Stand der Technik ist es bekannt, mit Hilfe von Ionenaustauschern mit einem stark sauren Austauscherharz in Trinkwasser enthaltene Calcium-Ionen gegen Magnesium-Ionen auszutauschen. Hierzu wird zum Beispiel in der DE 100 20 437 A1 ein Verfahren beschrieben, bei welchem ein Ionenaustauscher mit einem stark sauren Kationenaustauscherharz mittels einer Lösung aus zum Beispiel Magnesiumchlorid regeneriert wird. Nach der Regeneration befindet sich das stark saure Austauscherharz des Ionenaustauschers in der Magnesium-Form und kann dann bei der Aufbereitung von Trinkwasser seine Magnesium-Ionen im Austausch gegen Calcium-Ionen abgeben. Nach der Erschöpfung des Kationenaustauscherharzes kann der Ionenaustauscher mit einer Lösung aus Magnesiumchlorid wieder regeneriert werden.

Im Unterschied zu einem stark sauren Kationenaustauscherharz kann ein schwach saures Kationenaustauscherharz jedoch nicht mittels einer Salzlösung, wie zum Beispiel Magnesiumchlorid, regeneriert werden. Schwach saure Kationenaustauscherharze, die nach einem Einsatz zur Enthärtung von Wasser in der Calcium-Form vorliegen, also im Wesentlichen zu 100 % ihrer Ionenaustauscherkapazität mit Calcium-Ionen beladen sind, sind erschöpft und lassen sich ausschließlich mit Hilfe von Säuren regenerieren. Die Ursache dafür liegt darin, dass schwach saure Kationenaustauscherharze als Fest-Ionen bzw. austauschaktive Gruppen in der Regel Carboxylgruppen besitzen, an welche die Calcium-Ionen in der Calcium-Form gebunden sind. Die Calcium-Ionen liegen daher nur wenig dissoziiert im Ionenaustauscher vor und können somit nur in einer sauren Umgebung dissoziiert und gegen die Wasserstoff-Ionen der Säure ausgetauscht werden. Nach der Regeneration mit einer Säure befindet sich der Austauscher wieder in der Wasserstoff-Ionen-Form, d.h. er ist im Wesentlichen zu 100 % seiner Ionenaustauscherkapazität mit Wasserstoff-Ionen beladen.

Schwach saure Ionenaustauscherharze können nach einer Regeneration mit Säure in einem weiteren Aufbereitungsschritt konditioniert werden, indem man sie zum Beispiel mittels Natron- oder Kalilauge in die Natrium- oder Kalium-Form überführt, in der sie statt mit Wasserstoff-Ionen mit Natriumoder Kalium-Ionen beladen sind.

Aus dem Stand der Technik ist es weiterhin bekannt, dass konditionierte schwach saure Kationenaustauscherharze eingesetzt werden können, um andere Kationen, zum Beispiel Schwermetall-Ionen oder Härtebildner-Ionen aus dem Wasser zu entfernen. Hierbei werden die Schwermetall- oder Härtebildner-Ionen gegen Natrium- oder Kalium-Ionen ausgetauscht. Befindet sich ein schwach saures Kationenaustauscherharz jedoch in der Calcium-Form, so ist ein Austausch von Kationen, ausgenommen Wasserstoff-Ionen, nicht mehr möglich.

Ausgehend hiervon liegt der vorliegenden Erfindung die Aufgabe zugrunde, ein Verfahren und eine Vorrichtung zur Aufbereitung von Wasser und insbesondere zur Aufbereitung von Trinkwasser bereitzustellen, bei denen die zuvor beschriebenen Nachteile nicht auftreten und eine Anreicherung des Wassers mit Magnesium-Ionen möglich ist.

Diese Aufgabe wird erfindungsgemäß durch die Merkmale der Ansprüche 1 und 11 gelöst, indem das Wasser durch einen Ionenaustauscher geleitet wird, der ein schwach saures Ionenaustauschermaterial und vorzugsweise ein schwach saures Kationenaustauscherharz enthält, das mindestens zu einem Teil seiner Ionenaustauscherkapazität mit Magnesium-Ionen beladen bzw. angereichert ist.

Unter einem schwach sauren Ionenaustauschermaterial bzw. Kationenaustauscherharz wird im Rahmen der vorliegenden Erfindung ein Material verstanden, wie u.a. in Hartinger, Ludwig, "Handbuch der Abwasser- und Recyclingtechnik für die metallverarbeitende Industrie", Carl Hanser Verlag, München, Wien 1991 angegeben. Gemäß Kapitel 5.2.3.3 dieses Handbuchs unterscheidet man danach bei Ionenaustauscherharzen zunächst zwischen Kationenaustauschern und Anionenaustauschern, je nachdem, welche austauschaktiven Gruppen die Harze enthalten. Diese Gruppen lassen sich weiter differenzieren, indem man bei den Kationenaustauschern stark saure und schwach saure und bei den Anionenaustauschern stark basische und schwach basische Austauscherharze unterscheidet, die sich bei den Austausch-Reaktionen entsprechend als starke bzw. schwache Säuren oder als starke bzw. schwache Basen verhalten. Demnach verhalten sich schwach saure Kationenaustauscher wie schwache Säuren und bilden wie diese eine weitgehend undissoziierte Form, in der sie kaum andere Kationen zu adsorbieren vermögen.

Überraschender Weise konnte jedoch festgestellt werden, dass es mit Hilfe eines mit Magnesium-Ionen beladenen schwach sauren Kationenaustauschers sehr wohl möglich ist, einen Austausch von Magnesium-Ionen gegen Calcium- und auch gegen Schwermetall-Ionen vorzunehmen.

Diese Tatsache ist insofern überraschend, als Calcium und Magnesium Erdalkalimetalle mit sehr ähnlichen Eigenschaften sind, woraus man eigentlich schließen sollte, dass Magnesium-Ionen ähnlich wie Calcium-Ionen mit den austauschaktiven Carboxyl-Gruppen von schwach sauren Kationenaustauscherharzen Komplexe bilden und daher ebenfalls nicht dissoziiert in der Fest-Ionen-Matrix des schwach sauren Kationenaustauschers vorliegen. Dieser Schluss ist insofern auch naheliegend, als es bei Waschmitteln bekannt ist, zur Verhinderung von Ablagerungen mittels Carboxylaten eine Komplexierung von sowohl Calcium- und Magnesium-Ionen herbeizuführen, da beide Arten von Ionen bei der Komplexierung ein ähnliches Verhalten zeigen. Dies würde jedoch bedeuten, dass ein Austausch der Magnesium-Ionen des Kationenaustauschers gegen andere Kationen, ausgenommen Wasserstoff-Ionen, nicht möglich wäre.

Jedoch konnte nachgewiesen werden, dass ein solcher Austausch mit dem erfindungsgemäßen Verfahren und der erfindungsgemäßen Vorrichtung möglich ist, was gemäß einer bevorzugten Ausgestaltung der Erfindung bei der Trinkwasseraufbereitung ausgenutzt werden kann, um unter gleichzeitiger Anreicherung des Wassers mit Magnesium-Ionen eine Abreicherung von Calcium- und/oder Schwermetall-Ionen im Wasser zu erreichen.

Bei Untersuchungen wurde festgestellt, dass Magnesium-Ionen in einem schwach sauren Kationenaustauscher in sehr viel stärker dissoziierter Form als Calcium-Ionen vorliegen, das heißt im Gegensatz zu den Calcium-Ionen mit den Carboxylgruppen des schwach sauren Kationenaustauschers keine starke Bindung eingehen. Daher wird für die Austauschreaktion bzw. die Regeneration des Kationenaustauschers zur Dissoziation der Magnesium-Ionen keine Säure benötigt, so dass ein mit Magnesium-Ionen beladener schwach saurer Kationenaustauscher fähig ist, seine Magnesium-Ionen gegen im Wasser befindliche Kationen, wie zum Beispiel Calcium-, Kupfer- oder Blei-Ionen auszutauschen. Beim Einsatz eines solchen schwach sauren Kationenaustauschers in der Magnesium-Form zur Aufbereitung von Trinkwasser erfolgt eine Anreicherung des Trinkwassers mit Magnesium-Ionen, welche die anderen, im Rohwasser enthaltenen Kationen, wie beispielsweise die Calcium-, Kupfer- oder Blei-Ionen ganz oder teilweise ersetzen.

Grundsätzlich ist es dabei möglich, das schwach saure Kationenaustauschermaterial vollständig in die Magnesium-Form zu überführen, in der das Ionenaustauschermaterial im Wesentlichen zu 100 % seiner Ionenaustauscherkapazität mit Magnesium-Ionen beladen ist. In diesem Fall werden bei der Austauschreaktion nahezu alle im Trinkwasser enthaltenen Kationen gegen Magnesium-Ionen des Austauschers ersetzt, wodurch eine maximale Konzentration an Magnesium-Ionen im Trinkwasser erreicht werden kann. Im Zustand der vollständigen Beladung mit Magnesium erfolgt der Austausch ohne eine nennenswerte Verschiebung des pH-Wertes.

Ein Ionenaustauscher mit einem derartigen, mit Magnesium-Ionen beladenen Kationenaustauschermaterial kann mit Vorteil zur Aufbereitung von sogenannten Gipswässern, das heißt Wässern mit hohen Gehalten an Calcium und Sulfat, eingesetzt werden. Diese Wässer können in Rohrleitungen, Warmwassererzeugern und anderen wasserführenden Installationen zu starken Ausfällungen und Ablagerungen aus schlecht löslichem Calciumsulfat führen. Wenn jedoch mit dem erfindungsgemäßen Verfahren die im Wasser enthaltenen Calcium-Ionen gegen Magnesium-Ionen ausgetauscht werden, enthält das aufbereitete Wasser an Stelle des schlecht löslichen Calciumsulfats leicht lösliches Magnesiumsulfat, so dass die Gefahr von Ausfällungen und Ablagerungen deutlich vermindert wird.

Beim Einsatz des erfindungsgemäßen Verfahrens am Point of Use (POU) sieht eine bevorzugte Ausgestaltung der Erfindung jedoch vor, den schwach sauren Kationenaustauscher nur zu einem Teil seiner Ionenaustauscherkapazität mit Magnesium-Ionen zu beladen. Ein nur teilweise mit Magnesium-Ionen beladener schwach saurer Kationenaustauscher ersetzt zwar nur einen Teil der im Wasser enthaltenen Calcium-Ionen durch Magnesium-Ionen, entfernt jedoch ebenfalls nahezu sämtliche Schwermetalle und ermöglicht es darüber hinaus, den pH-Wert des aufbereiteten Wassers auf einen gewünschten Wert unterhalb von etwa 7 einzustellen. Außerdem kann auf diese Weise der zur Beladung des Austauschermaterials erforderliche Zeitraum verkürzt werden.

Da der pH-Wert des aufbereiteten Wassers vom Grad der Beladung des Ionenaustauschermaterials mit Magnesium-Ionen bzw. vom Grad der Beladung mit Wasserstoff-Ionen abhängt, kann zum Beispiel ein zur Zubereitung von Tee günstiger pH-Wert von weniger als 7,0 und vorzugsweise von etwa 6,5 dadurch eingestellt werden, dass das schwach saure Ionenaustauschermaterial in einem Bereich von 30 bis 70 % und am besten in einem Bereich von etwa 50 bis 60 % seiner Ionenaustauscherkapazität mit Magnesium-Ionen beladen wird, während sich der Rest des Ionenaustauschermaterials in der Wasserstoff-Ionen-Form befindet, so dass es entsprechend in einem Bereich von 70 bis 30 % und am besten in einem Bereich von etwa 60 bis 50 % seiner Ionenaustauscherkapazität mit Wasserstoff-Ionen beladen ist. In diesem Zustand wird das aufzubereitende Trinkwassers mit Magnesium-Ionen angereichert, während gleichzeitig der pH-Wert im Vergleich zu einem vollständig mit Magnesium-Ionen beladenen Ionenaustauschermaterial abgesenkt wird.

Für Trinkwasser ist es von Vorteil, wenn der pH-Wert des aufbereiteten Wassers über einen Wert von 6.5 ansteigt, da die Magnesiumkonzentration im aufbereiteten Wasser umso stärker ansteigt, je höher der pH-Wert ist.

Die erstmalige Beladung des schwach sauren Kationenaustauschers mit Magnesium-Ionen bzw. seine Regeneration erfolgt bevorzugt mittels einer Suspension aus Magnesiumoxid, in die der Kationenaustauscher zugesetzt und für einige Zeit mit der Suspension verrührt wird.

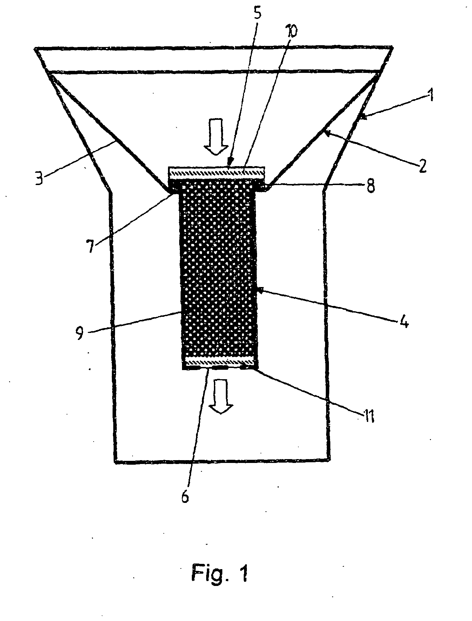

Im Folgenden wird die Erfindung anhand eines in der Zeichnung dargestellten Ausführungsbeispiels näher erläutert, wobei die einzige Figur eine Vorrichtung zur Anreicherung von Trinkwasser mit Magnesium-Ionen zeigt.

Die in der Zeichnung dargestellte Vorrichtung besteht im Wesentlichen aus einem nach oben offenen Behälter 1 sowie einem Einsatz 2 zur Filterung und Aufbereitung von Trinkwasser, der in ein erweitertes oberes Stirnende des Behälters 1 eingehängt ist.
Der Einsatz 2 besteht im Wesentlichen aus einem nach oben zu erweiterten Oberteil 3 und einem aufrechten, im Wesentlichen zylindrischen Unterteil in Form einer austauschbar in das Oberteil 3 eingesetzten Kartusche 4, die an ihrem oberen Stirnende mit einer Einlassöffnung 5 und an ihrem unteren Stirnende mit einer Mehrzahl von Auslassöffnungen 6 versehen ist. Die Kartusche 4 durchsetzt von oben her eine runde Aufnahmeöffnung im Boden 10 7 des Oberteils 3 und ist mittels einer Ringdichtung 8 gegenüber dem Oberteil 3 abgedichtet, so dass kein Wasser aus dem Oberteil 3 an der Kartusche 4 vorbei ins Innere des Behälters 1 gelangen kann. Das Oberteil 3 bildet einen Speicher für das aufzubereitende Trinkwasser, das nach dem Einfüllen in das Oberteil 3 infolge seiner Schwerkraft durch die Kartusche 4 hindurch in den Behälter 1 strömt. Die Kartusche 4 enthält einen Ionenaustauscher 9 in Form einer Schüttung aus einem mit Magnesium-Ionen beladenen schwach sauren Kationenaustauscherharz, so dass beim Hindurchtritt des Wassers durch die Kartusche 4 Calcium-Ionen und Schwermetall-Ionen aus dem Rohwasser gegen Magnesium-Ionen aus dem Kationenaustauscherharz ausgetauscht und dadurch das aufbereitete Wasser mit Magnesium-Ionen angereichert wird. Am oberen und am unteren Ende der Kartusche 4 ist jeweils ein Feinfilter 10 bzw. 11 vorgesehen, der den Eintritt von im Rohwasser enthaltenen partikelförmigen Verunreinigungen in den Ionenaustauscher 8 bzw. den Austritt von Feststoffen aus der Kartusche 4 durch die Austrittsöffnungen 6 in den Behälter 1 verhindert.

Bei Wasseraufbereitungsversuchen mit einem ähnlichen Behälter wurde als Ionenaustauscher 9 im Unterteil 4 des Einsatzes 2 ein Kationenaustauscher der Firma Lanxess vom Typ S 8227 verwendet, der zuvor mit Magnesium-Ionen beladen worden war, so dass er mit ca. 60 % seiner Ionenaustauscherkapazität in der Magnesium-Ionen-Form und mit der restlichen Kapazität in der Wasserstoff-Ionen-Form vorlag.

Zur Beladung des schwach sauren Kationenaustauscherharzes des Kationenaustauschers mit Magnesium-Ionen war zuvor das in der Wasserstoff-Ionen-Form vorliegende Austauscherharz des Ionenaustauschers im Batch in eine wässrige Suspension aus Magnesiumoxid (MgO) zugegeben und über mehrere Stunden lang in der Suspension gerührt worden.

Bei den anschließenden Versuchen wurde der Kationenaustauscher mit Leitungswässern beaufschlagt, die Calcium- und Magnesium-Ionen sowie Kupfer-Ionen in unterschiedlichen Konzentrationen enthielten. Vor und nach dem Hindurchtritt der Leitungswässer durch den Kationenaustauscher wurde deren Gehalt an Calcium- und Magnesium-Ionen bzw. an Kupfer-Ionen gemessen, um den Erfolg einer Anreicherung des Trinkwassers mit Magnesium-Ionen bzw. den Erfolg einer Beseitigung von Schwermetall-Ionen zu ermitteln.

Tabelle 1 und 2 zeigen für zwei unterschiedliche Leitungswässer die Ergebnisse der Versuche im Hinblick auf die Anreicherung der Wässer mit Magnesium-Ionen sowie die Veränderung des pH-Werts und des Gehalts an Calcium-Ionen, wobei der pH-Wert sowie die Konzentration der Ca⁺⁺- und Mg⁺⁺-Ionen sowohl im Zulauf und im Ablauf des Ionenaustauschers in Abhängigkeit vom aufbereiteten Wasservolumen angegeben sind.

**Tabelle 1**

| | Zulauf Ionenaustauscher | | | Ablauf Ionenaustauscher | | |
|---|---|---|---|---|---|---|
| Wasservolumen in Liter | pH | Ca⁺⁺ in ppm | Mg⁺⁺ in ppm | pH | Ca⁺⁺ in ppm | Mg⁺⁺ in ppm |
| 2 | 7,6 | 115 | 16,0 | 6,7 | 14,1 | 13,8 |
| 8 | 7,6 | 113 | 17,4 | 6,3 | 15,7 | 24,2 |
| 14 | 7,6 | 112 | 15,6 | 6,3 | 18,0 | 25,6 |
| 26 | 7,6 | 111 | 15,1 | 6,5 | 29,1 | 29,8 |
| 38 | 7,6 | 112 | 14,7 | 6,6 | 40,2 | 29,3 |
| 71 | 7,6 | 114 | 14,9 | 7,0 | 84,1 | 20,9 |
| 106 | 7,6 | 114 | 14,2 | 7,1 | 91,3 | 18,0 |
| 126 | 7,6 | 114 | 14,2 | 7,2 | 97,8 | 16,1 |

**Tabelle 2**

| | Zulauf Ionenaustauscher | | | Ablauf Ionenaustauscher | | |
|---|---|---|---|---|---|---|
| Wasservolumen in Liter | pH | Ca⁺⁺ in ppm | Mg⁺⁺ in ppm | pH | Ca⁺⁺ in ppm | Mg⁺⁺ in ppm |
| 2 | 7,4 | 80,4 | 8,78 | 6,7 | 7,8 | 0,3 |
| 5 | 7,4 | 68,2 | 5,20 | 6,4 | 9,2 | 10,5 |
| 10 | 7,4 | 63,7 | 3,77 | 6,4 | 11,8 | 14,0 |
| 21 | 7,4 | 63,5 | 3,83 | 6,5 | 15,5 | 15,7 |
| 61 | 7,5 | 62,9 | 3,92 | 6,8 | 32,6 | 12,8 |
| 106 | 7,5 | 69,4 | 5,31 | 6,9 | 39,6 | 14,8 |
| 123 | 7,4 | 69,6 | 5,94 | 6,9 | 50,3 | 9,9 |

Wie man aus Tabelle 1 und 2 sieht, wird beim Hindurchtritt des Wassers durch den Ionenaustauscher ein Teil der im Wasser enthaltenen Calcium-Ionen gegen Magnesium-Ionen aus dem schwach sauren Kationenaustauscherharz ausgetauscht. Dadurch liegt die Konzentration der Magnesium-Ionen im aufbereiteten Wasser deutlich über der Konzentration der Magnesium-Ionen im Rohwasser. Weiter ist zu ersehen, dass der pH-Wert des Wassers nach dem Hindurchtritt durch den Ionenaustauscher mindestens 6,3 beträgt, so dass das aus dem Ablauf des Ionenaustauschers austretende Wasser zur Zubereitung von Tee besonders gut geeignet ist.

Tabelle 3 zeigt für ein weiteres Leitungswasser die Ergebnisse der Versuche im Hinblick auf die Abreicherung von Kupfer-Ionen im Wässer, die Anreicherung von Magnesium-Ionen im Wasser, sowie die Veränderung des Gehalts an Calcium-Ionen, wobei in Abhängigkeit vom aufbereiteten Wasservolumen die Konzentration der Ca⁺⁺-, Mg⁺⁺- und Cu⁺⁺-Ionen im Zulauf und im Ablauf des Ionenaustauschers angegeben sind.

**Tabelle 3**

| | Zulauf Ionenaustauscher | | | Ablauf Ionenaustauscher | | |
|---|---|---|---|---|---|---|
| Wasservolumen in Liter | Ca⁺⁺ in ppm | Mg⁺⁺ in ppm | Cu⁺⁺ in ppm | Ca⁺⁺ in ppm | Mg⁺⁺ in ppm | Cu⁺⁺ in ppm |
| 3 | 116 | 23,4 | 2,09 | 22,9 | 26,0 | 0,11 |
| 16 | 118 | 24,8 | 2,19 | 59,0 | 35,0 | 0,13 |
| 40 | 119 | 24,7 | 2,13 | 83,2 | 27,9 | 0,24 |

Wie aus Tabelle 3 zu ersehen, ist das mit Magnesium beladene schwach saure Kationenaustauscherharz des Ionenaustauschers in der Lage, über 90 % der im Wasser enthaltenen Kupfer-Ionen gegen Wasserstoff- bzw. Magnesium-Ionen auszutauschen.

In weiteren Untersuchungen wurde festgestellt, dass dies auch für andere Schwermetall-Ionen gilt, wie zum Beispiel Blei-Ionen, die ebenfalls gegen Magnesium-Ionen ausgetauscht werden.

Zusammenfassend lässt sich somit sagen, dass ein Ionenaustauscher mit einem mit Magnesium-Ionen beladenen schwach saures Kationenaustauscherharz es ermöglicht, sowohl Calcium- als auch Schwermetall-Ionen aus dem Rohwasser zu entfernen und durch Magnesium-Ionen zu ersetzen.

Im Unterschied zu einem Ionenaustauscher mit einem schwach sauren Kationenaustauscherharz in der Wasserstoff-Ionen-Form, der nur diejenigen Kationen austauscht, die stöchiometrisch den Hydrogencarbonat-Ionen entsprechen, werden zusätzlich auch die Kationen der zugehörigen Sulfate, Nitrate und Chloride ausgetauscht.

## Patentansprüche

1. Verfahren zur Anreicherung von Trinkwasser mit Magnesium-Ionen, wobei das Wasser durch einen Ionenaustauscher (9) geleitet
wird, der ein schwach saures Ionenaustauschermaterial enthält, das mindestens zu einem Teil seiner Ionenaustauscherkapazität mit Magnesium-Ionen beladen ist, **dadurch gekennzeichnet, dass** das Ionenaustauschermaterial in einem Bereich von 70 bis 30% seiner Ionenaustauscherkapazität mit Wasserstoff-Ionen beladen ist.

2. Verfahren nach Anspruch 1, **dadurch gekennzeichnet, dass** als Ionenaustauschermaterial ein schwach saures Kationenaustauscherharz eingesetzt wird.

3. Verfahren nach Anspruch 1 oder 2, **dadurch gekennzeichnet, dass** dem Wasser Calcium-Ionen im Austausch gegen die Magnesium-Ionen entzogen werden.

4. Verfahren nach einem der vorangehenden Ansprüche, **dadurch gekennzeichnet, dass** das Ionenaustauschermaterial in einem Bereich von 30 bis 70 % seiner Ionenaustauscherkapazität mit Magnesium-Ionen beladen ist.

5. Verfahren nach einem der vorangehenden Ansprüche, **dadurch gekennzeichnet, dass** das Wasser vor und/oder nach dem Hindurchleiten durch den Ionenaustauscher gefiltert wird.

6. Verfahren nach einem der vorangehenden Ansprüche, **dadurch gekennzeichnet, dass** der pH-Wert des Wassers durch die Beladung mit den Magnesium-Ionen auf einen Wert von 6,0 oder mehr, vorzugsweise von 6,5 oder mehr, eingestellt wird.

7. Verfahren nach einem der vorangehenden Ansprüche,, **dadurch gekennzeichnet, dass** der pH-Wert des Wassers durch die Beladung mit den Magnesium-Ionen auf einen Wert von 7,5 oder weniger, vorzugsweise von 7,0 oder weniger, eingestellt wird.

8. Verfahren nach einem der vorangehenden Ansprüche, **dadurch gekennzeichnet, dass** das Wasser von oben in einen Behälter (1) eingefüllt wird, wobei der Ionenaustauscher (9) durchströmt wird.

9. Verfahren nach einem der vorangehenden Ansprüche, **dadurch gekennzeichnet, dass** das Wasser zur Zubereitung von Heißgetränken, insbesondere Tee verwendet wird.

10. Verfahren nach einem, der vorangehenden Ansprüche, **dadurch gekennzeichnet, dass** das Ionenaustauschermaterial mit einer Suspension aus Magnesiumoxid und Wasser regeneriert wird.

11. Vorrichtung zur Anreicherung von Trinkwasser mit Magnesium-Ionen mit einem mit dem Wasser beaufschlagbaren Ionenaustauscher (9), der ein schwach saures Ionenaustauschermaterial enthält, das mindestens zu einem Teil seiner Ionenaustauscherkapazität mit Magnesium-Ionen beladen ist, **dadurch gekennzeichnet, dass** das Ionenaustauschermaterial in einem Bereich von 70 bis 30 % seiner Ionenaustauscherkapazität mit Wasserstoff-Ionen beladen ist, und wobei das Ionenaustauschermaterial in einem Bereich von 30 bis 70 % seiner Ionenaustauscherkapazität mit Magnesium-Ionen beladen ist.

12. Vorrichtung nach Anspruch 11, **dadurch gekennzeichnet, dass** das Ionenaustauschermaterial ein schwach saures Kationenaustauscherharz ist.

13. Vorrichtung nach einem der Ansprüche 11 bis 12, **dadurch gekennzeichnet, dass** der Ionenaustauscher (9) ein Bett aus dem schwach sauren Ionenaustauschermaterial enthält.

14. Vorrichtung nach einem der Ansprüche 11 bis 13, **gekennzeichnet durch** einen in Strömungsrichtung des Wassers durch den Ionenaustauscher (9) vor und/oder hinter dem Ionenaustauschermaterial angeordneten Filter (10, 11).

15. Vorrichtung nach einem der Ansprüche 11 bis 14, **dadurch gekennzeichnet, dass** der Ionenaustauscher (9) als Teil einer Kartusche (4) vorzugsweise für den Einsatz in einem Trinkwasserbehälter (1) ausgebildet ist.

## Claims

1. Process for enriching drinking water with magnesium ions, wherein the water is conveyed through an ion exchanger (9), which contains a weakly acidic ion exchanger material, which is loaded at least to a part of its capacity with magnesium ions, **characterized in that** the ion exchanger material is loaded with hydrogen ions in the range of 70 to 30% of its ion exchanger capacity.

2. Process according to claim 1, **characterized in that**, a weakly acidic cation exchanger resin is used as the ion exchanger material.

3. Process according to claim 1 or 2, **characterized in that** calcium ions are extracted from the water in exchange against the magnesium ions.

4. Process according to one of the preceding claims, **characterized in that** the ion exchanger material is loaded with magnesium ions in the range of 30 to 70% of its ion exchanger capacity.

5. Process according to one of the preceding claims, **characterized in that** the water is filtered before and/or after it is conveyed through the ion exchanger.

6. Process according to one of the preceding claims, **characterized in that** the pH value of the water is adjusted by loading with the magnesium ions to a value of 6.0 or more, preferably to a value of 6.5 or more.

7. Process according to one of the preceding claims, **characterized in that** the pH value of the water is adjusted by loading with the magnesium ions to a value of 7.5 or less, preferably 7.0 or less.

8. Process according to one of the preceding claims, **characterized in that** a container (1) is filled with water from above so that the water flows through the ion exchanger (9).

9. Process according to one of the preceding claims, **characterized in that** the water is used for preparation of hot drinks, in particular tea.

10. Process according to one of the preceding claims, **characterized in that** the ion exchanger material is regenerated with a suspension of magnesium oxide and water.

11. A device for enriching drinking water with magnesium ions, having an ion exchanger (9), which can be loaded by the water and which contains a weakly acidic ion exchanger material, which is loaded at least to a part of its ion exchanger capacity with magnesium ions, **characterized in that** the ion exchanger material is loaded with hydrogen ions in the range of 70 to 30% of its ion exchanger capacity, and wherein the ion exchanger material is loaded with magnesium ions in the range of 30 to 70% of its ion exchanger capacity.

12. The device according to claim 11, **characterized in that** the ion exchanger material is a weakly acidic cationic exchanger resin.

13. The device according to one of the claims 11 through 12, **characterized in that** the ion exchanger (9) contains a bed consisting of weakly acidic ion exchanger material.

14. The device according to one of the claims 11 through 13, **characterized by** a filter (10, 11) arranged before and/or after the ion exchanger material in the direction of the flow of the water through the ion exchanger (9).

15. The device according to one of the claim 11 through 14, **characterized in that** the ion exchanger (9) is designed as a part of a cartridge (4), preferably for the use in a drinking water container (1).

## Revendications

1. Procédé d'enrichissement d'eau potable en ions magnésium, dans lequel l'eau est passée dans un échangeur d'ions (9) qui contient un matériau faiblement acide d'échange d'ions dont au moins une partie de la capacité d'échange d'ions est chargée en ions magnésium, **caractérisé en ce que** le matériau d'échange d'ions est chargé d'ions hydrogène dans la plage de 70 à 30 % de sa capacité d'échange d'ions.

2. Procédé selon la revendication 1, **caractérisé en ce qu'**il utilise comme matériau d'échange d'ions une résine faiblement acide d'échange de cations.

3. Procédé selon la revendication 1 ou 2, **caractérisé en ce que** les ions calcium sont extraits de l'eau par échange avec des ions magnésium.

4. Procédé selon l'une des revendications précédentes, **caractérisé en ce que** le matériau d'échange d'ions est chargé en ions magnésium dans une plage de 30 à 70 % de sa capacité d'échange d'ions.

5. Procédé selon l'une des revendications précédentes, **caractérisé en ce que** l'eau est filtrée avant et/ou après son passage dans l'échangeur d'ions.

6. Procédé selon l'une des revendications précédentes, **caractérisé en ce que** la valeur du pH de l'eau est ajustée à 6,0 ou plus et de préférence à 6,5 ou plus par chargement en ions magnésium.

7. Procédé selon l'une des revendications précédentes, **caractérisé en ce que** la valeur du pH de l'eau est réglée à 7,5 ou moins et de préférence à 7,0 ou moins par chargement en ions magnésium.

8. Procédé selon l'une des revendications précédentes, **caractérisé en ce qu'**un récipient (1) est rempli d'eau par le haut, l'eau traversant l'échangeur d'ions (9).

9. Procédé selon l'une des revendications précédentes, **caractérisé en ce que** l'eau est utilisée pour préparer des boissons chaudes et en particulier du thé.

10. Procédé selon l'une des revendications précédentes, **caractérisé en ce que** le matériau d'échange d'ions est régénéré à l'aide d'une suspension d'oxyde de magnésium et d'eau.

11. Dispositif d'enrichissement d'eau potable en ions magnésium à l'aide d'un échangeur d'ions (9) qui peut être chargé d'eau et qui contient un matériau faiblement acide d'échange d'ions dont au moins une partie de la capacité d'échange d'ions est chargée en ions magnésium, **caractérisé en ce que** le matériau d'échange d'ions est chargé en ions hydrogène dans une plage de 70 à 30 % de sa capacité d'échange d'ions, et le matériau d'échange d'ions est chargé en ions magnésium dans une plage de 30 à 70 % de sa capacité d'échange d'ions.

12. Dispositif selon la revendication 11, **caractérisé en ce que** le matériau d'échange d'ions est une résine faiblement acide d'échange de cations.

13. Dispositif selon l'une des revendications 11 à 12, **caractérisé en ce que** l'échangeur d'ions (9) contient un lit de matériau faiblement acide d'échange d'ions.

14. Dispositif selon l'une des revendications 11 à 13, **caractérisé par** un filtre (10, 11) disposé en amont et/ou en aval du matériau d'échange d'ions dans la direction d'écoulement de l'eau dans l'échangeur d'ions (9).

15. Dispositif selon l'une des revendications 11 à 14, **caractérisé en ce que** l'échangeur d'ions (9) est configuré comme partie d'une cartouche (4) de préférence destinée à être utilisée dans un récipient (1) à eau potable.
